**Europäisches Patentamt**

**European Patent Office**

**Office européen des brevets**

(19)

(11) Publication number : **0 426 106 B1**

(12) # EUROPEAN PATENT SPECIFICATION

(45) Date of publication of patent specification :
**23.02.94 Bulletin 94/08**

(51) Int. Cl.[5] : **C09K 11/84**

(21) Application number : **90120792.8**

(22) Date of filing : **30.10.90**

(54) **Method for preparing a phosphor.**

(30) Priority : **31.10.89 JP 282001/89**

(43) Date of publication of application :
**08.05.91 Bulletin 91/19**

(45) Publication of the grant of the patent :
**23.02.94 Bulletin 94/08**

(84) Designated Contracting States :
**DE FR GB IT NL**

(56) References cited :
**FR-A- 2 211 521**
**DATABASE DERWENT WORLD PATENT IN-
DEX, no. AN84-184852 "Fluorescent Material
..."; & JP-A-59 102 981**

(73) Proprietor : **KASEI OPTONIX, LTD.**
**12-7, Shibadaimon 2-chome Minato-ku
Tokyo 105 (JP)**

(72) Inventor : **Iwasaki, Kazuhito**
**c/o Kasei Optonix Ltd.**
**1060, Odawara-shi, Kanagawa-ken (JP)**
Inventor : **Tukihashi, Youji**
**c/o Kasei Optonix Ltd.**
**1060, Odawara-shi, Kanagawa-ken (JP)**
Inventor : **Tono, Hideo**
**c/o Kasei Optonix Ltd.**
**1060, Odawara-shi, Kanagawa-ken (JP)**

(74) Representative : **Wächtershäuser, Günter, Dr.**
**Tal 29**
**D-80331 München (DE)**

EP 0 426 106 B1

**Description**

The present invention relates to a method for preparing a phosphor of the formula $Ln_2O_2S:Ln'$ ($Ln$ = Gd, Y, Lu, La; $Ln'$ = Eu, Tb, Sm, Pr) useful for color televisions, color display tubes for computers.

The above red-emitting phosphor is excellent in emission efficiency, and no substitute is presently available. Therefore, it is practically used widely for various applications including the above applications.

However, for color televisions and color display tubes, a high level of fineness is generally required for the purpose of improving the image quality. Accordingly, the phosphor is required to have excellent dispersibility as a powder to form a high quality coating layer such as a high density layer of uniform quality.

For the preparation of the phosphor, it is known to employ (1) a method wherein $Ln_2O_3$ and $Ln'_2O_3$ raw materials are firstly dissolved in an acid and then precipitated as their oxalates, which are then pyrolysed to obtain a mixture of $Ln_2O_3$ and $Ln'_2O_3$, and then a flux and a sulfiding agent are added to the mixture, followed by baking to obtain the phosphor (see "Phosphor Handbook" published by Ohm Company, p.261), (2) a method wherein a flux and a sulfiding agent are added directly to $Ln_2O_3$ and $Ln'_2O_3$ raw materials, followed by baking to obtain the phosphor (U.S. Patent US-A- 3,502,590), and (3) a method wherein a composition of $Ln_2O_2S:Ln'$ is firstly prepared by a low temperature reaction, then a flux is added to the composition, and the mixture is again baked at a high temperature to obtain the phosphor (U.S. Patent US-A- 3,878,119).

The sulfiding agent used here includes, for example, sulfur, an alkali metal polysulfide and hydrogen sulfide gas.

As the flux, an alkali metal salt or the like is generally known. In particular, as the flux for a $Ln_2O_2S:Eu$ phosphor, it is known to employ a fluorinating agent such as $LiHF_2$ or $LiBF_4$ to improve the grain formation of the phosphor (Japanese Unexamined Patent Publication No. 21288/1977). However, such a fluorinating agent has corrosiveness and toxicity. Accordingly, it tends to reduce the life of the electric furnace, and a special care is required for its handling.

For the preparation of a $Ln_2O_2S:Ln'$ phosphor, high melting point oxides $Ln_2O_3$ and $Ln'_2O_3$ are used as raw materials. Accordingly, high temperature baking is required for the crystal growth. However, the higher the baking temperature and the longer the baking time, the more the aggregation of the phosphor particles proceeds simultaneously with the crystal growth. The aggregated phosphor requires a strong force for its disintegration. Further, there has been a problem that such disintegration will bring about a decrease in the emission efficiency of the phosphor. On the other hand, baking at a high temperature for a long period of time brings about a drawback that it substantially reduces the life of the furnace material or the heating element of the electric furnace, and a large quantity of energy is required for the baking.

It is an object of the present invention to overcome the above drawbacks and to provide a method for economically preparing a $Ln_2O_2S:Ln'$ phosphor excellent in emission efficiency at a relatively low temperature in a relatively short period of time.

The present invention provides a method for preparing a phosphor of the formula:

$$Ln_2O_2S:Ln'$$

wherein $Ln$ is at least one element selected from the group consisting of Gd, Y, Lu and La, and $Ln'$ is at least one element selected from the group consisting of Eu, Tb, Sm and Pr, which comprises adding to $Ln_2O_3$ and $Ln'_2O_3$ a flux containing boron oxide in an amount of From 0.01 to 1 part by weight per 100 parts by weight of the total amount of $Ln_2O_3$ and $Ln'_2O_3$ and a sulfiding agent, followed by baking.

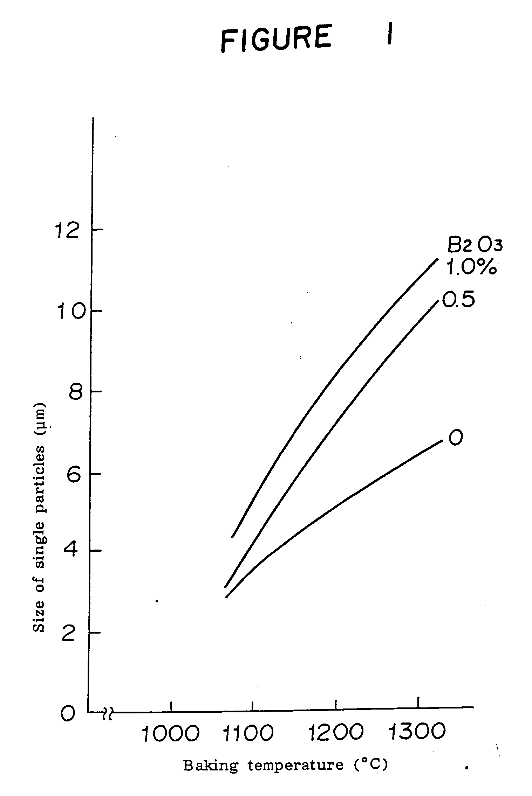

In the accompanying drawing, Figure 1 is a graph showing the change in the size of single particles of the phosphor when the amount of boron oxide added was changed and the temperature for baking was changed.

Now, the present invention will be described in further detail with reference to the preferred embodiments.

The boron oxide is added in an amount of from 0.01 to 1 part by weight, preferably from 0.05 to 0.6 part by weight, per 100 parts by weight of the total amount of $Ln_2O_3$ and $Ln'_2O_3$ raw materials. When the amount of boron oxide added is at least 0.01 part by weight, the growth of phosphor particles is remarkable. If the amount exceeds 1 part by weight, the emission luminance of the phosphor tends to decrease to a level below the practical limit, and it becomes difficult to dissolve the remaining boron oxide after baking.

According to the present invention, the baking conditions can be moderated by incorporating the predetermined amount of boron oxide as a flux at the time of synthesizing the $Ln_2O_2S:Ln'$ phosphor, whereby it is possible to let the phosphor particles grow to a desired particle size by the baking at a low temperature in a short period of time. Under such baking conditions, aggregation of the phosphor particles can be suppressed, and the time required for disintegrating the aggregated phosphor particles to single particles can be shortened. Further, it is thereby possible to obtain a phosphor having a uniform particle size. Figure 1 is a graph showing the change in the size of single particles of the phosphor, when the phosphor was prepared by changing the amount of boron oxide added to a level of 0, 0.5 and 1.0 part by weight and adjusting the baking time to three hours when the amount was 0 part by weight and to one hour when the amount was 0.5 part by weight and 1.0 part by weight and by changing the baking temperature. From the graph, it is evident that by the addition of boron oxide, the baking conditions can be moderated. The present invention is most practical when Ln is Y, Gd or a combination of Y and Gd, and L'n is Eu, Tb or a combination of Eu and Tb.

Thus, in the present invention, boron oxide added to the phosphor raw materials shows the most excellent effects when baking is conducted by using a mixture comprising boron oxide, an alkali metal carbonate and sulfur added to $Ln_2O_3$ and $Ln'_2O_3$ as the main raw materials. When boron fluoride, boric acid or an alkali metal borate was used instead of boron oxide, effects equal to the present invention was not obtained.

Now, the present invention will be described in further detail with reference to Examples. However, it should be understood that the present invention is by no means restricted to such specific Examples.

EXAMPLES 1 to 6

94.5 g of $Y_2O_3$, 5.5 g of $Eu_2O_3$, 50 g of $Na_2CO_3$ and 50 g of sulfur were mixed. Further, $B_2O_3$ was added in an amount as identified in Table 1. The mixture was thoroughly mixed, then put into a crucible and baked under the baking conditions as identified in Table 1. Then, the remaining flux was removed by washing with water, and then aggregates were disintegrated by a ball mill under a prescribed condition to obtain a phosphor in the form of single particles.

The state of single particles was confirmed by a microscope. The disintegrating time is the time required for disintegrating the aggregates of the phosphor to single particles by putting the phosphor, water and balls in a predetermined ratio in the ball mill, followed by rotating the ball mill under a predetermined condition. The particle size distributions σlog(L) and σlog(S) are the values defined by the following equations:

$$\sigma\log(L) = \log(d_{84.1}/d_{50})$$
$$\sigma\log(S) = -\log(d_{15.9}/d_{50})$$

Here, the larger the value of σlog(L), the higher the content of coarse particles, and the smaller the value of σlog(S), the higher the content of fine particles. In order to obtain a dense phosphor layer, it is usually required that small particles are contained in a large amount. When a phosphor layer pattern is formed by a printing method, it is necessary to have relatively large particles incorporated to facilitate the curing reaction of the coating film by letting ultraviolet rays pass therethrough. However, the phosphor particles obtained by baking and disintegration usually contains substantial amounts of unduly large particles and unduly fine particles. Particularly, the distribution on a large particle side is usually unnecessarily wide.

The relative luminance is such that on the basis that the emission luminance of a phosphor obtained by baking the raw materials at 1,200°C for 3 hours without incorporating boron oxide, followed by disintegration for 8 hours in a ball mill, is evaluated as 100, the emission luminance of other phosphor is represented by percentage relative thereto.

In Table 1, the amount of boron oxide, the baking temperature, the baking time, the disintegrating time, the size of single particles, the particle size distribution and the relative luminance are also given with respect to the phosphors obtained as above.

EXAMPLE 7

97 g of $Y_2O_3$, 3 g of $Pr_2O_3$, 50 g of $Na_2CO_3$ and 50 g of sulfur were mixed. Further, 0.5 g of $B_2O_3$ was added, and the mixture was thoroughly mixed, then put in a crucible and baked at 1,200°C for one hour. In the same manner as in Examples 1 to 6, disintegration was conducted in a ball mill for one hour to obtain a phosphor having a size of single particles of 9.0 μm, σlog(L) of 0.30 and σlog(S) of 0.35. As a comparative sample, a phosphor prepared under the same condition as above except that no $B_2O_3$ was added, had a size of single particles of 6.2 μm, σlog(L) of 0.40 and σlog(S) of 0.45, and the luminance was the same irrespective of the addition of $B_2O_3$.

EXAMPLE 8

97 g of $Gd_2O_3$, 3 g of $Tb_2O_3$, 50 g of $NaCO_3$ and 50 g of sulfur were mixed. Further, 0.2 g of $B_2O_3$ was added thereto, and the mixture was thoroughly mixed, then put in a crucible and baked at 1,200°C for one hour. Disintegration was conducted in the same manner as in Examples 1 to 6 in a ball mill to obtain a phosphor having a size of single particles of 8.5 μm, σlog(L) of 0.32 and σlog(S) of 0.32. As a comparative sample, a phosphor prepared under the same condition as above except that no $B_2O_3$ was added, had a size of single particles of 7.0μm, σlog(L) of 0.37 and σlog(S) of 0.42, and the luminance was the same irrespective of the addition of $B_2O_3$.

Table 1

| | Amount of $B_2O_3$ 1) | Baking temp. (°C) | Baking time (hr) | Disintegrating time (hr) | Size of single particles (μm) | Particle size distribution | | Relative luminance (%) |
|---|---|---|---|---|---|---|---|---|
| | | | | | | $\sigma\log(L)$ | $\sigma\log(S)$ | |
| Example 1 | 0.01 | 1,200 | 1 | 4 | 6.0 | 0.40 | 0.44 | 100 |
| Example 2 | 0.05 | 1,200 | 1 | 4 | 6.4 | 0.40 | 0.44 | 100 |
| Example 3 | 0.1 | 1,200 | 1 | 4 | 6.5 | 0.36 | 0.43 | 100 |
| Example 4 | 0.3 | 1,200 | 1 | 4 | 7.3 | 0.31 | 0.35 | 100 |
| Example 5 | 0.5 | 1,200 | 1 | 4 | 8.8 | 0.30 | 0.33 | 100 |
| Example 6 | 1.0 | 1,200 | 1 | 4 | 12.2 | 0.29 | 0.32 | 99 |
| Comparative Example 1 | 0 | 1,200 | 3 | 8 | 5.8 | 0.40 | 0.44 | 100 |
| Comparative Example 2 | 2.0 | 1,200 | 1 | 4 | 14.0 | 0.28 | 0.31 | 96 |
| Comparative Example 3 | 0 | 1,300 | 3 | 20 | 6.5 | 0.44 | 0.45 | 98 |

1) The amount of $B_2O_3$ is represented by parts by weight per 100 parts by weight of the oxide raw material.

It is evident from Table 1 that in the Examples, the size of single particles increases with an increase of the amount of boron oxide added, whereby the particle size distribution σlog(L) can be controlled at a lower level. Further, the particle size distribution σlog(S) can also be made low, which indicates that the proportion of particles having small particle sizes decreases.

On the other hand, in Comparative Examples 1 and 3, boron oxide was omitted. In Comparative Example 1, the baking temperature was 1,200°C which was the same as the baking temperature in the Examples, and in Comparative Example 3, the baking temperature was 1,300°C. In both Comparative Examples, the baking time was three hours which was longer than the baking time in Examples, in an attempt to let the crystals grow. However, in Comparative Example 1, the size of single particles was at best 5.8 μm, and in Comparative Example 3, the single particles grew to a level of 6.5 μm, but aggregation proceeded to a substantial extent, whereby 20 hours were required for the disintegration to single particles. Further, the relative luminance of the phosphor dropped to 98%. In Comparative Example 2, a phosphor was prepared under the same conditions as the Examples except that the amount of boron oxide was changed to 2.0 part by weight, whereby the relative luminance of the phosphor dropped substantially to a level of 96%.

As described in the foregoing, according to the present invention, by adopting the above construction, a $Ln_2O_2S:Ln'$ phosphor can be prepared at a relatively low temperature in a relatively short period of time. It is thereby possible to obtain a phosphor excellent in emission efficiency and having a uniform particle size with no substantial aggregation. Further, the life of the apparatus can be prolonged, and the energy for baking can be saved.

## Claims

1. A method for preparing a phosphor of the formula:

$$Ln_2O_2S:Ln'$$

wherein Ln is at least one element selected from the group consisting of Gd, Y, Lu and La, and Ln' is at least one element selected from the group consisting of Eu, Tb, Sm and Pr, which comprises adding to $Ln_2O_3$ and $Ln'_2O_3$ a flux containing boron oxide in an amount of from 0.01 to 1 part by weight per 100 parts by weight of the total amount of $Ln_2O_3$ and $Ln'_2O_3$ and a sulfiding agent, followed by baking.

2. The method according to Claim 1, wherein the amount of the boron oxide added is from 0.05 to 0.6 part by weight.

3. The method according to Claim 1, wherein the phosphor obtained by the baking is washed with water to remove the remaining flux, followed by disintegrating aggregates by a ball mill to single particles.

4. The method according to Claim 1, wherein Ln is Y, Gd or a combination of Y and Gd, and Ln' is Eu, Tb or a combination of Eu and Tb.

## Patentansprüche

1. Verfahren zur Herstellung eines Phosphors der Formel:

$$Ln_2O_2S:Ln'$$

worin Ln mindestens ein Element, ausgewählt aus der Gruppe, bestehend aus Gd, Y, Lu und La bedeutet, und Ln' mindestens ein Element, ausgewählt aus der Gruppe, bestehend aus Eu, Tb, Sm und Pr bedeutet, umfassend die Zugabe zu $Ln_2O_3$ und $Ln'_2O_3$ eines boroxidhaltigen Flußmittels in einer Menge von 0,01 bis 1 Gewichtsteil pro 100 Gewichtsteile der Gesamtmenge an $Ln_2O_3$ und $Ln'_2O_3$ und eines sulfidierenden Mittels, gefolgt von Brennen.

2. Verfahren nach Anspruch 1, wobei die Menge an zugegebenen Boroxid 0,05 bis 0,6 Gewichtsteile beträgt.

3. Verfahren nach Anspruch 1, wobei der durch das Brennen erhältliche Phosphor mit Wasser gewaschen wird, um verbliebenes Flußmittel zu entfernen, gefolgt von Zerkleinern der Aggregierungen mit einer Kugelmühle zu einzelnen Teilchen.

4. Verfahren nach Anspruch 1, wobei Ln Y, Gd oder eine Kombination von Y und Gd darstellt und Ln' Eu, Tb oder eine Kombination von Eu und Tb bedeutet.

## Revendications

1. Procédé de préparation d'un matériau luminescent de la formule :

$$Ln2O2s:Ln'$$

dans laquelle Ln est au moins un élément choisi dans le groupe constitué par Gd, Y, Lu et La, et Ln' est au moins un élément choisi dans le groupe constitué par Eu, Tb, Sm et Pr, qui comprend l'addition à Ln203 et Ln'203 d'un fondant contenant de l'oxyde de bore en une quantité de 0,01 à 1 partie en poids pour 100 parties en poids de la quantité globale de Ln203 et Ln'203 et d'un agent de sulfuration, suivie d'une cuisson.

2. Procédé selon la revendication 1, dans lequel la quantité d'oxyde de bore ajoutée est de 0,05 à 0,6 partie en poids.

3. Procédé selon la revendication 1, dans lequel le matériau luminescent obtenu par cuisson est lavé avec de l'eau afin d'éliminer le fondant restant, puis les agrégats sont désintégrés en particules individuelles à l'aide d'un broyeur à boulets.

4. Procédé selon la revendication 1, dans lequel Ln est Y, Gd ou une combinaison de Y et de Gd, et Ln' est Eu, Tb ou une combinaison de Eu et de Tb.

# FIGURE  1